# EUROPEAN PATENT APPLICATION

(11) **EP 4 390 611 A1**
(43) Date of publication of application: **26.06.2024**
(21) Application number: 22216305.7
(22) Date of filing: 23.12.2022
(51) Int. Cl.: G05G 1/10, A47J 43/00, G05G 1/015

(54) **CONTROL KNOB FOR A HOUSEHOLD APPLIANCE**

(71) Applicant: BSH Hausgeräte GmbH, 81739 München (DE)
(72) Inventor: Gruber, Borut, 2380 Slovenj Gradec (SI); Brecko, Ales, 3000 Celje (SI); Pajk, Luka, 3000 Celje (SI)

(57) **Abstract**

A control knob (110) for a household appliance (100) is described, wherein the control knob (110) comprises a knob housing (210) configured to be attached to the housing wall of the appliance (100), and an electronics unit (220) comprising at least one light element (221) which is configured to emit light. Furthermore, the control knob (110) comprises a rotatable knob part (250) rotatably attached to the knob housing (210), wherein the rotatable knob part (250) comprises a, in particular cylindrical, wall with at least one transparent and/or translucent symbol area (252). The control knob (110) further comprises at least one light guide (211) configured to guide light from a first end of the light guide (211), which is facing the light element (221), to a second end of the light guide (211), which is facing the inner surface of the wall of the rotatable knob part (250), such that light from the light element (221) passes through the symbol area (252) within the wall of the rotatable knob part (250), if the symbol area (252) is aligned with the second end of the light guide (211), and such that light from the light element (221) is blocked by the wall of the rotatable knob part (250), if the symbol area (252) is not aligned with the second end of the light guide (211).

## Description

The present document relates to a household appliance, in particular a kitchen appliance. In particular, the present document relates to a control knob for a user interface of a household appliance.

A household appliance, in particular a kitchen appliance, may be configured to process a food item which is placed within the receptacle of the appliance using one or more (possibly interchangeable) tools. Example tools are a knife, a shredder, a dough hook, etc. The household appliance may comprise a user interface with a control knob, wherein the control knob may enable a user to select an operation program and/or an operation parameter (such as the temperature of a heating unit and/or the rotational speed of a tool) of the household appliance.

A user of the household appliance may have difficulties when setting an operation program and/or an operation parameter of the household appliance, in particular if the user is not familiar with the appliance.

The present document addresses the technical problem of increasing the comfort-of-use of a household appliance, in particular regarding the user interaction via a control knob of the user interface of the household appliance. The technical problem is solved by the independent claim. Preferred examples are described in the dependent claims.

According to an aspect, a control knob for a household appliance is described. Example household appliances are an oven, a dishwasher, a washing machine, a dryer, or a kitchen appliance, in particular a cooking appliance and/or a kitchen machine.

The control knob comprises a knob housing which is configured to be attached to a housing wall of the appliance. The housing wall may be arranged in a perpendicular manner with regards to the surface that the appliance is standing on. The knob housing may be fixed to the housing wall (such that the knob housing is not movable during operation of the appliance). The knob housing may have a (circular) cylindrical shape. The height axis of the knob housing may be perpendicular to the housing wall of the appliance that the knob housing is attached to.

Furthermore, the control knob comprises an electronics unit (e.g., a printed circuit board) comprising at least one light element (in particular at least one light emitting diode, LED) which is configured to emit light. The electronics unit is located within the knob housing. Furthermore, the electronics unit may be fixed and/or attached to the knob housing, such that the electronics unit does not move within the knob housing.

The control knob further comprises a rotatable knob part which is rotatably attached to the knob housing, wherein the rotatable knob part comprises a, in particular (circular) cylindrical, wall with at least one transparent and/or translucent symbol area. The knob housing and the rotatable knob part may share the same height axis. The rotation axis of the rotatable knob part may be parallel and/or colinear to the height axis of the knob housing and/or of the rotatable knob part. The knob housing may be located between the housing wall of the appliance and the rotatable knob part.

Hence, a control knob is described which comprises a fixed knob housing (with an electronics unit for generating light) and a rotatable knob part which can be rotated by a user (e.g., for changing a setting and/or an operation program of the appliance). The rotatable knob part may be designed such that the rotatable knob part does not comprise any electronic component. The rotatable knob part may comprise an axis which is coupled to a sensor (within the knob housing), wherein the sensor is configured to determine the angular position of the rotatable knob part (wherein different angular positions may be associated with different user inputs of the control knob).

The control knob comprises at least one light guide (which may be made up of a light-guiding material, such as glass or plastic) which is configured to guide light from a first end of the light guide, which is facing the light element (such that light from the light element is coupled into the light guide), to a second end of the light guide, which is facing the inner surface of the (cylindrical) wall of the rotatable knob part (such that light from the light guide illuminates a localized region of the inner surface of the wall of the rotatable knob part). The light guide may have a cross-section with a diameter of 5 mm or less. The second end of the light guide may be placed so close to the inner surface of the wall of the rotatable knob part that only a localized area of the inner surface is illuminated by the light guide, wherein the localized area is smaller than two times the cross-section of the second end of the light guide. In particular, the localized area of the inner surface of the wall of the rotatable knob part may substantially be equal to the cross-section of the second end of the light guide.

The second end of the light guide is arranged such that light from the light element passes through the symbol area within the wall of the rotatable knob part (and therefore illuminates the symbol area), if the symbol area is aligned with the second end of the light guide. The symbol area may be smaller than two times the cross-section of the second end of the light guide. In particular, the symbol area may substantially be equal to the cross-section of the second end of the light guide.

In a preferred example, the second end of the light guide has a rectangular cross-section, thereby providing a homogeneous illumination of a (possibly rectangular) symbol area. In generic terms, the shape of the cross-section of the second end of the light guide may be adapted to and/or may correspond to and/or may be equal to the shape of the symbol area, which is to be illuminated by the light guide.

Furthermore, the second end of the light guide is arranged such that light from the light element is blocked by the wall of the rotatable knob part, if the symbol area is not aligned with the second end of the light guide.

Hence, a control knob is described which is configured to provide a selective illumination of one of more symbol areas within the (circular and/or cylindrical and/or ring-shaped) wall of the rotatable knob part, thereby increasing the comfort-of-use of a household appliance.

As indicated above, the knob housing, the electronics unit and the light guide are preferably fixed to one another and/or are configured to be attached in a fixed position to the housing wall of the appliance. On the other hand, the rotatable knob part is configured to be rotated around the rotation axis, for placing the one or more symbol areas into or out of alignment with the second end of the light guide. As a result of this, a particularly robust control knob with selectively illuminated symbol areas may be provided.

The light guide may comprise multiple second ends, and the light guide may be configured to guide light from the first end to each one of the second ends. The second ends of the light guide may be located at different angular positions around the rotation axis of the rotatable knob part and/or at different longitudinal positions along the rotation axis of the rotatable knob part, each second end facing the inner surface of the wall of the rotatable knob part. By providing a light guide with multiple second ends, multiple symbol areas (which are located at different angular and/or longitudinal positions on the wall of the rotatable knob part) may be illuminated in an efficient manner.

The electronics unit may comprise a plurality of light elements (wherein the light elements may be activated and/or deactivated and/or controlled independently from one another). Furthermore, the control knob may comprise a plurality of light guides for the corresponding plurality of light elements. Each light guide from the plurality of light guides may comprise a first end which is facing and which is aligned with the corresponding light element. Furthermore, each light guide from the plurality of light guides may comprise a second end which is facing the inner surface of the wall of the rotatable knob part and which is configured to be aligned with at least one symbol area within the wall of the rotatable knob part. The second ends of the different light guides may be located at different angular and/or longitudinal positions. By providing multiple light elements and multiple light guides, different symbol areas on the rotatable knob part may be selectively illuminated, thereby further increasing the comfort-of-use of the household appliance.

As already indicated above, the rotatable knob part may comprise multiple symbol areas which are separated from one another and which are arranged at different angular positions around the rotation axis of the rotatable knob part and/or at different longitudinal positions along the rotation axis of the rotatable knob part. The different symbol areas may be illuminated selectively using one or more light guides and one or more corresponding light elements. The different symbol areas may be associated with different user inputs.

The (cylindrical) wall of the rotatable knob part may be made up of transparent and/or translucent material, and the inner surface and/or the outer surface of the wall may be (completely) covered with a light blocking coating, apart from the one or more symbol areas. As a result of this, the different (transparent and/or translucent) symbol areas may be provided in a particularly efficient manner.

The control knob may comprise one or more light blocking elements (e.g., a light blocker and/or a light deflector) which are configured to prevent light that is emitted by the one or more light elements from passing from the knob housing to the rotatable knob part via a path that lies outside of the one or more light guides. By providing one or more light blocking elements, the localization of the selective illumination of the one or more symbol areas may be further improved.

The control knob (and/or the appliance) may comprise a control unit. The control unit may be configured to determine the angular position of the rotatable knob part relative to the knob housing (wherein different angular positions typically correspond to different user inputs). Alternatively, or in addition, status information regarding the status of the appliance may be determined.

The control unit may be configured to adapt one or more characteristic of the light which is emitted by the light element in dependence of the angular position of the rotatable knob part (i.e., in dependence of the user input) and/or in dependence of the status information. Example characteristics of the light comprise the intensity, the color and/or the blinking frequency. By adapting one or more characteristics of the light which illuminates one or more symbol areas, the comfort-of-use of the appliance can be increased further.

The control unit may be configured to determine, based on an operation program of the appliance, a target rotation (and/or a target angular position) of the rotational knob part that is to be performed (and/or that is to be set) by the user of the appliance. Furthermore, the control unit may be configured to select a light element from the plurality of light elements to be activated and/or to adapt a characteristic of the selected light element, in dependence of the target rotation (and/or in dependence of the target angular position). By way of example, the operation program may make use of selectively illuminated symbol areas to guide the user (e.g., in the context of a guided cooking process). As a result of this, the comfort-of-use of the appliance can be increased further.

The knob housing may comprise an illuminated ring at the (cylindrical) wall of the knob housing. The illuminated ring may be illuminated by light that is emitted by a light element of the electronics unit, thereby increasing the comfort-of-use of the appliance in an efficient manner.

The knob housing may comprise one or more fluid channels which are configured to guide a fluid, in particular water, away from the electronics unit. The one or more fluid channels may guide fluid from the top of the knob housing towards the bottom of the knob housing (while avoiding the electronics unit). As a result of this, the robustness of the control knob may be increased.

According to a further aspect, a household appliance is described, wherein the household appliance comprises a housing wall and a control knob as part of a user interface of the appliance, wherein the control knob is attached to the housing wall. The control knob is designed as specified within the present document.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1a: shows a block diagram of a kitchen appliance, in particular of a kitchen machine or a food processor;
- Figure 1b: shows a perspective view of an example kitchen machine or food processor;
- Figure 2a: shows a control knob;
- Figure 2b: shows an exploded view of a control knob;
- Figure 3a: shows a front view of the knob housing; and
- Figure 3b: shows a sectional view of the knob housing and the rotatable knob part.

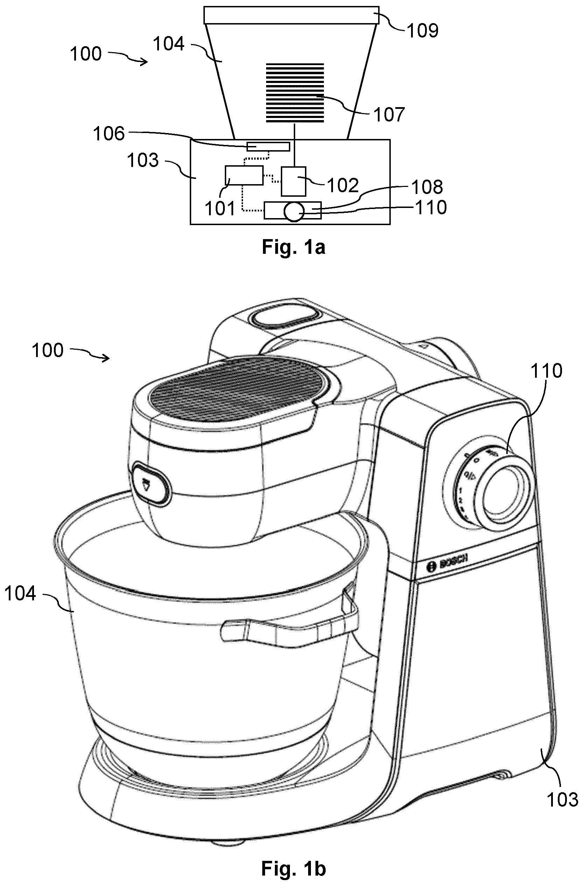

As outlined above, the present document is directed at increasing the comfort-of-use of a user interface of a household appliance, in particular a kitchen machine or food processor. In this context, Fig. 1a shows a block diagram of an example appliance 100 (in particular, a kitchen machine or food processor) which comprises a base unit 103 on which a receptacle 104, in particular a bowl, is placed. The receptacle 104 may be configured to be covered by a lid 109. The base unit 103 comprises a motor 102 which is configured to drive a tool 107 that is located within the receptacle 104. The tool 107 may be detachable and/or exchangeable. In particular, the appliance 100 may be configured to be used with an arbitrary tool 107 out of a pre-determined set of different tools 107.

The appliance 100 may comprise a heating unit 106 (which may alternatively, or in addition, be integrated within the receptacle 104) for heating the receptacle 104, e.g., for allowing a food item to be heated up within the receptacle 104. Furthermore, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as Bluetooth or WLAN. A control unit 101 of the appliance 100 may be configured to operate the appliance 100, in particular the motor 102 and/or the heating unit 106, in dependence of a user input received via the user interface 108 (of the appliance 100 or of a remote device).

Fig. 1b shows a perspective view of an example kitchen appliance 100, in particular a kitchen machine or food processor. In the example of Fig. 1b, a tool 107 (not shown in Fig. 1b) is driven via a drive mechanism which is located above the receptacle 104. In this case also the motor is located above the receptacle 104 next to the drive mechanism.

As illustrated in Figs. 1a and 1b, the user interface 108 of the appliance 100 may comprise a control knob 110 which is configured to be rotated by a user of the appliance 100, e.g., in order to set an operation program and/or an operation parameter of the appliance. The user inputs which can be caused by the control knob 110 may vary, e.g., in dependence on the operation status of the appliance 100. By way of example, the control knob 110 may allow a user to set the speed of the motor 102 of the appliance 100, if a tool 107 is attached to the motor 102 or the drive mechanism. Furthermore, the control knob 110 may allow a user to select and to activate or to deactivate a particular operation program, if the appliance 100 is within a particular operation status.

Hence, the manner in which the control knob 110 may be actuated, in particular rotated, by the user may vary in dependence of the operation status of the appliance 100. The user may not be aware of such dependencies, which may lead to erroneous user inputs and/or which may lead to discomfort for the user. In the present document, a control knob 110 is described which allows one or more localized areas of the surface of the rotatable knob part of the control knob 110 to be illuminated in a selective manner, in order to assist a user of a household appliance 100 in the context of the user interaction with the appliance 100.

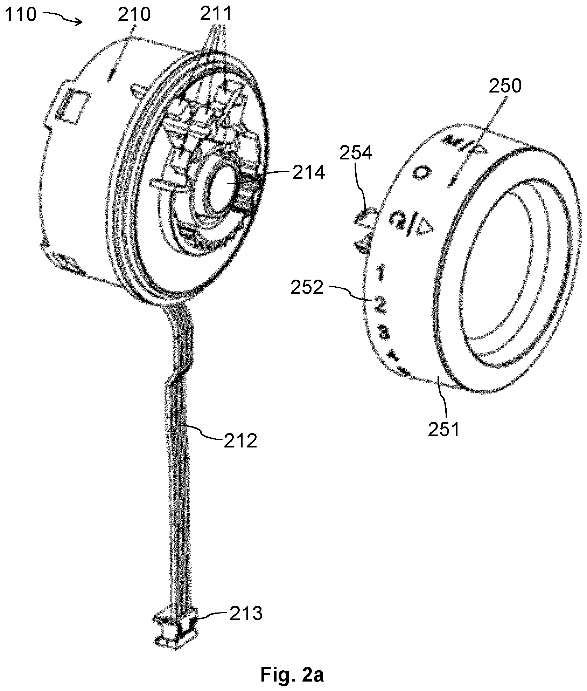

Fig. 2a shows an example control knob 110 which comprises a knob housing 210 and a rotatable knob part 250. The knob housing 210 may be fixed to a housing wall of the appliance 100 and the rotatable knob part 250 may be attached to the knob housing 210 such that the rotatable knob part 250 can be rotated by a user around a rotation axis, wherein the rotation axis is typically arranged perpendicular to the housing wall of the appliance 100. The rotatable knob part 250 may comprise a central axis 254 which may be attached to an axis holder 214 of the knob housing 210. In particular, the central axis 254 may be attached to a sensor which is configured to sense the angular position of the rotatable knob part 205 (wherein different angular positions typically correspond to different user inputs).

The knob housing 210 comprises an electronics unit which comprises one or more electronic components, in particular one or more light elements, such as light emitting diodes (LEDs). The electronics unit may be coupled to a power supply and/or to the control unit 101 of the appliance 100 via a cable 212 and/or via an electronic connector 213.

The rotatable knob part 250 may have the form of a (circular) cylinder. The lateral wall 251 of the rotatable knob part 250 (which may e.g., be touched by a user for rotating the rotatable knob part 250) may comprise one or more symbol areas 252, wherein each symbol area 252 may comprise a symbol which indicates a user input that may be generated by rotating the respective symbol area 252 to a defined angular position (e.g., to the uppermost position). The symbol areas 252 may be light transparent and/or translucent, such that light may shine through the symbol areas 252 in a localized manner (localized to each individual symbol area 252).

The control knob 110 comprises one or more light guides 211 which are configured to guide light from the corresponding one or more light elements to one or more symbol areas 252 of the rotatable knob part 250. The lateral wall 251 of the rotatable knob part 250 has an inner surface (facing the axis 254 of the rotatable knob part 250) and an outer surface (which can be touched by a user for rotating the rotatable knob part 250). The individual symbol areas 252 may be implemented as transparent and/or translucent sections within the wall 251 of the rotatable knob part 250. The one or more light guides 211 may be configured to guide light towards the inner surface of the wall 251 of the rotatable knob part 250, such that the light from a light element shines through a symbol area 252, if the symbol area 252 is positioned at the (second) end of at least one of the light guides 211.

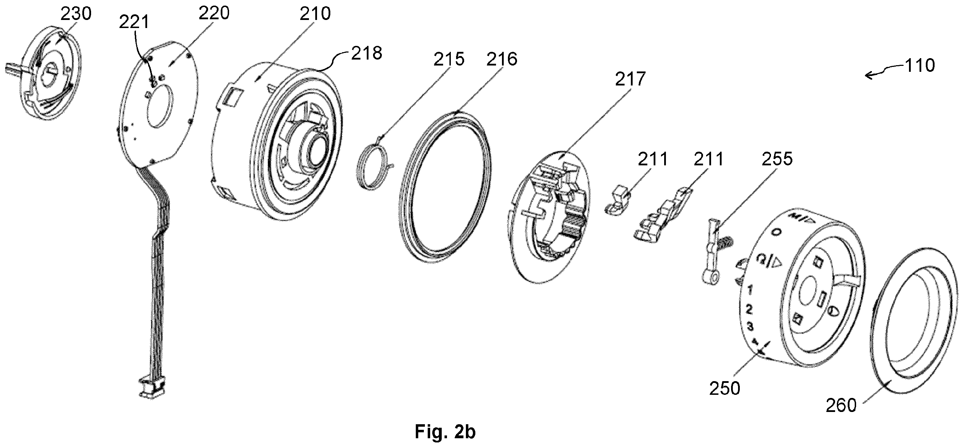

Fig. 2b shows an exploded view of an example control knob 110. The control knob 110 may comprise a contact holder 230 which is configured to hold the control knob 110. The contact holder 230 may be attached to a wall of the housing of an appliance 100, and the control knob 110, in particular the knob housing 210 of the control knob 110, may be attached to the contract holder 230, thereby attaching the control knob 110 to the wall of the housing of the appliance 100.

Furthermore, Fig. 2b shows the electronics unit 220 which may be arranged between the contact holder 230 and the knob housing 210 and/or which may be located within the knob housing 210. The electronics unit 220 may comprise one or more light elements 221, in particular LEDs, which are each configured to emit light. The one or more light elements 221 may be controlled by the control unit 101 of the appliance 100 (in an individual manner). For this purpose, the one or more light elements 221 may be coupled to the control unit 101 via a cable 212.

The knob housing 210 and the electronics unit 220 are maintained in a fixed position. In particular, the knob housing 210 and the electronics unit 220 may be attached in a fixed position to the housing of an appliance 100. The rotatable knob part 250 may be attached to the knob housing 210 such that the rotatable knob part 250 can be rotated by a user around a rotation axis which is perpendicular to the knob housing 210. The control knob 110 typically comprises a sensor (not shown) which is configured to sense the angular position of the rotatable knob part 250, wherein different angular positions may be associated with different user inputs. The control unit 101 of the appliance 100 may be configured to determine the angular position of the rotatable knob part 250 of the control knob 110. The appliance 100 may be operated in dependence of the angular position, thereby providing a comfortable and reliable control of the appliance 100 using the control knob 110.

Fig. 2b shows different light guides 211, wherein each light guide 211 may have at least or exactly one first end which is facing a corresponding light element 221. Light emitted from a light element 221 is coupled into the first end of the respective light guide 211. Furthermore, the light guide 211 comprises a second end which is facing the inner surface of the wall 251 of the rotatable knob part 250, such that light that has been coupled into the light guide 211 illuminates the inner surface of the wall 251 of the rotatable knob part 250. This light is visible at the outer surface of the wall 251 of the rotatable knob part 250, if the second end of the light guide 211 is facing and/or is aligned with a symbol area 252 of the wall 251 of the rotatable knob part 250. On the other hand, this light is blocked by the wall 251 of the rotatable knob part 250, if the second end of the light guide 211 is facing a section of the wall 251 between two different symbol areas 252.

The one or more light guides 211 are maintained in a fixed position. The second ends of the one or more light guides 211 each face the inner surface of the wall 251 of the rotatable knob part 250. However, the seconds ends of different light guides 211 are typically positioned at different angular positions (around the rotation axis) and/or at different longitudinal positions (along the rotation axis) on the inner surface of the wall 251 of the rotatable knob part 250. Hence, the different light guides 211 may be used to guide light from one or more light elements 221 to different positions on the inner surface of the wall 251 of the rotatable knob part 250 (and to differently positioned symbol areas 252).

The control knob 110 may have one or more light blocking elements 216, 217 for preventing light from passing from the electronics unit 220 to the rotatable knob part 250 in an uncontrolled manner (outside of the one more light guides 211). In particular, the control knob 110 may comprise a light blocker 216, e.g., having the form of a ring, which is arranged between the knob housing 210 and the rotatable knob part 250. The light blocker 216 may be configured to block light from passing from the outer wall of the knob housing 210 (which may be transparent, e.g., to create an illuminated ring 218) to the outer wall 251 of the rotatable knob part 250 (which may be non-transparent, apart from the one or more symbol areas 252). Alternatively, or in addition, the control knob 110 may comprise a light deflector 217 which may be arranged between the light blocker 216 and the rotatable knob part 250 and which may be configured to prevent light from passing towards the center of the knob 110.

The knob 110 may further comprise a spring 215 and/or a lever 255 with a spring, which may be used to control the rotational movement of the rotatable knob part 250. By way of example, the rotational movement may be limited to a predefined angular range. Alternatively, or in addition, the rotatable knob part 250 may be designed to be rotated away from a neutral angular position by a user, and to return back to the neutral angular position automatically once the user lets loose the rotatable knob part 250.

Furthermore, Fig. 2b shows the face plate 260 of the knob 110, which covers the face of the control knob 110 (and which may be configured to block light from leaving the knob 110 via the face side of the knob 110).

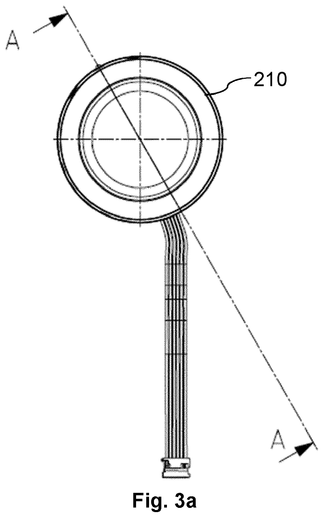

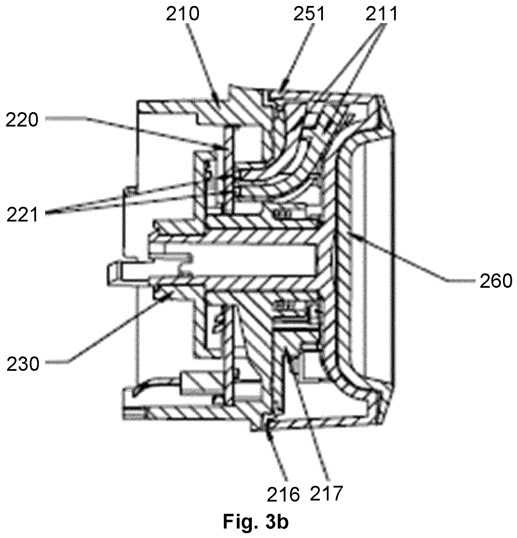

Fig. 3a shows a front view of the knob housing 210. Furthermore, Fig. 3a indicates the sectional plane A-A of the sectional view of Fig. 3b. It can be seen from Fig. 3b, how light from a light element 221 is transferred from the light element 221 to the inner surface of the wall 251 of the rotatable knob part 250, in particular to a symbol area 252 within the wall 251 of the rotatable knob part 250.

Hence, a control knob 110 is described which comprises only a single electronics unit 220 (fixed within the knob housing 210) which includes one or more LED's 221 (i..e, light elements) for illuminating one or more symbols (i.e., symbol areas 252) on the knob surface 251. One or more light guides 211 are used to guide light from the one or more fixed LED's 221 to the one or more symbols on the knob surface 251, wherein the one or more symbols are rotating with the rotatable knob part 210 of the knob 110. The one or more light guides 211 are attached to the knob housing 210 and are maintained in a fixed position.

Illuminated symbols on the rotatable knob part 250 may have a visual and/or guiding function for one or more automated programs (e.g., to guide a user to the position, to which the knob 110 has to be turned). The knob 110 is preferably designed according to all relevant safety measures, also with regards to liquid at the appliance 100.

The illuminated knob 110 comprises a knob housing 210, into which an electronics unit 220 with one or more LED's 221 for illuminating symbols on the knob 110 is integrated. The knob housing 210 and the electronics unit 220 are fixed. Light from the one or more LED's 221 is guided to knob symbols through one or more light guides 211, which are attached to the knob housing 210 and which are fixed. Each LED 221 can be switched ON or OFF individually and/or separately.

The rotatable knob part 250 may be made out of a transparent or translucent material, which conducts light through. The outer surfaces of the rotatable knob part 250 may be masked (painted, foiling, etc.), so that the light is let through the rotatable knob part 250 only in the one or more places 252 of the symbols. When rotating the rotatable knob part 250, only one or more symbols which are above one or more light guides 211 are illuminated in a selective manner.

The knob assembly 110 is preferably designed such that it comprises all relevant safety measures, including safety measures for pouring liquid over the appliance 100. The knob housing 210 may be made from a semi-transparent cloudy plastic so that a ring 218 around the knob 110 can be illuminated. Because of the ring's illumination it should be prevented that light will penetrate into the rotatable knob part 250. For this purpose, a light blocker 216 and/or a light deflector 217 may be used to prevent light from penetrating from the illuminated ring 218 and/or from the knob housing 210 to the rotatable knob part 250.

The selective illumination of one or more symbols may be used to guide a user during the operation of an automated program. By way of example, a certain position and/or symbol on the outer surface 251 of the rotatable knob part 250 may be illuminated (e.g., using a blinking light). This may indicate to the user that the rotatable knob part 250 needs to be rotated, e.g., such that the illuminated position and/or symbol is moved to the upmost position. Alternatively, or in addition, the symbol for the current position may be illuminated so that the user can quickly identify the current position of the control knob 110.

Hence a control knob 110 is described which is configured to illuminated different symbol areas 252 in a selective manner, thereby increasing the comfort-of-use of the user interface of a household appliance 100.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control knob (110) for a household appliance (100); wherein the control knob (110) comprises
- a knob housing (210) configured to be attached to a housing wall of the appliance (100);
- an electronics unit (220) comprising at least one light element (221) which is configured to emit light; wherein the electronics unit (220) is located within the knob housing (210);
- a rotatable knob part (250) rotatably attached to the knob housing (210); wherein the rotatable knob part (250) comprises a, in particular cylindrical, wall with at least one transparent and/or translucent symbol area (252); and
- at least one light guide (211) configured to guide light from a first end of the light guide (211), which is facing the light element (221), to a second end of the light guide (211), which is facing an inner surface of the wall of the rotatable knob part (250), such that
- light from the light element (221) passes through the symbol area (252) within the wall of the rotatable knob part (250), if the symbol area (252) is aligned with the second end of the light guide (211); and
- light from the light element (221) is blocked by the wall of the rotatable knob part (250), if the symbol area (252) is not aligned with the second end of the light guide (211).

2. The control knob (110) of claim 1, wherein
- the knob housing (210), the electronics unit (220) and the light guide (211) are fixed to one another and/or are configured to be attached in a fixed position to the housing wall of the appliance (100);
- the rotatable knob part (250) is configured to be rotated around a rotation axis, for placing the symbol area (252) into or out of alignment with the second end of the light guide (211); and
- in particular, the rotation axis is perpendicular to the housing wall of the appliance (110) that the knob housing (210) is attached to.

3. The control knob (110) of any previous claims, wherein
- the light guide (211) comprises multiple second ends;
- the light guide (211) is configured to guide light from the first end to each one of the second ends; and
- the second ends of the light guide (211) are located at different angular positions around a rotation axis of the rotatable knob part (250) and/or at different longitudinal positions along the rotation axis of the rotatable knob part (250), facing the inner surface of the wall of the rotatable knob part (250).

4. The control knob (110) of any previous claims, wherein
- the electronics unit (220) comprises a plurality of light elements (221);
- the control knob (110) comprises a plurality of light guides (211) for the corresponding plurality of light elements (221); and
- each light guide (211) from the plurality of light guides (211) comprises
- a first end which is facing and which is aligned with the corresponding light element (221); and
- a second end which is facing the inner surface of the wall of the rotatable knob part (250) and which is configured to be aligned with at least one symbol area (252) within the wall of the rotatable knob part (250).

5. The control knob (110) of any previous claims, wherein the rotatable knob part (250) comprises multiple symbol areas (252) which are separated from one another and which are arranged at different angular positions around a rotation axis of the rotatable knob part (250) and/or at different longitudinal positions along the rotation axis of the rotatable knob part (250).

6. The control knob (110) of any previous claims, wherein
- the wall of the rotatable knob part (250) is made up of transparent and/or translucent material; and
- the inner and/or an outer surface (251) of the wall are covered with a light blocking coating, apart from the at least one symbol area (252).

7. The control knob (110) of any previous claims, wherein the control knob (110) comprises one or more light blocking elements (216, 217) which are configured to prevent light that is emitted by the light element (221) from passing from the knob housing (210) to the rotatable knob part (250) via a path that lies outside of the one or more light guides (211).

8. The control knob (110) of any previous claims, wherein
- the control knob (110) comprises a control unit (101); and
- the control unit (101) is configured to
- determine an angular position of the rotatable knob part (250) relative to the knob housing (210); and/or
- determine status information regarding a status of the appliance (100); and
- adapt a characteristic of light emitted by the light element (221) in dependence of the angular position of the rotatable knob part (250) and/or in dependence of the status information.

9. The control knob (110) of claim 8, wherein the characteristic of the light comprises,
- an intensity;
- a color; and/or
- a blinking frequency.

10. The control knob (110) of any of claims 8 to 9 referring back to claim 4, wherein the control unit (101) is configured to
- determine, based on an operation program of the appliance (100), a target rotation of the rotational knob part (250) that is to be performed by a user of the appliance (100); and
- select a light element (221) from the plurality of light elements (221) to be activated and/or adapt a characteristic of the selected light element (221), in dependence of the target rotation.

11. The control knob (110) of any previous claims, wherein the light element (221) comprises one or more light emitting diodes.

12. The control knob (110) of any previous claims, wherein
- the knob housing (210) comprises an illuminated ring (218) at a wall of the knob housing (210); and
- the illuminated ring (218) is illuminated by light that is emitted by the light element (221) of the electronics unit (220).

13. The control knob (110) of any previous claims, wherein the knob housing (210) and/or the rotatable knob part (250) each have a circular cylindrical shape, with a rotation axis of the rotatable knob part (250) being colinear with a height axis of the knob housing (210) and/or the rotatable knob part (250).

14. The control knob (110) of any previous claims, wherein the knob housing (210) comprises one or more fluid channels which are configured to guide a fluid, in particular water, away from the electronics unit (220).

15. A household appliance (100) comprising
- a housing wall; and
- a control knob (110) according to any of the previous claims, as part of a user interface of the appliance (100), which is attached to the housing wall.
